# EUROPEAN PATENT SPECIFICATION

(11) **EP 0 561 880 B1**
(45) Date of publication and mention of the grant of the patent: **10.09.1997**
(21) Application number: 92900453.9
(22) Date of filing: 11.12.1991
(51) Int. Cl.: H04B 7/212

(54) **TDMA RANGING**
ABSTANDSMESSUNG IN EINEM T.D.M.A.-SYSTEM
PLAGE DE FONCTIONNEMENT D'UN SYSTEME A ACCES MULTIPLE A REPARTITION DANS LE TEMPS

(30) Priority: 12.12.1990 GB 9026932
(43) Date of publication of application: 29.09.1993
(73) Proprietor: GPT LIMITED, Coventry, CV3 1HJ (GB)
(72) Inventor: HEDDERLY, David Leslie, Watnall, Nottingham NG16 1HT (GB)
(74) Representative: Burrington, Alan
(86) International application number: GB9102198
(87) International publication number: WO9210884

(56) References cited:
- EP-A- 0 119 841
- EP-A- 0 269 120
- EP-A- 0 318 911
- IBM TECHNICAL DISCLOSURE BULLETIN. vol. 10, no. 7, 7 December 1967, NEW YORK US pages 923 - 924; H.L.BLASBALG ET AL: 'Ranging for Multiple Access Satellite Communications System'
- PROCEEDINGS OF THE IEEE vol. 65, no. 3, March 1977, NEW-YORK,US pages 434 - 443; P.P.NUSPL:'Synchronization Methods for TDMA'

## Description

The present invention concerns digital communication systems and is particularly concerned with multistation Demand Assigned Time Division Multiple Access Systems in which a population of outstations communicate with a head end via a common transmission medium. For the remainder of this specification Demand Assigned Time Division Multiple Access will be referred to as DA-TDMA Systems. In such systems digital information is communicated from the head end to the outstations in such a manner that all the outstations receive the same stream of digital information and select their traffic from it under the command of the head end. Traffic is only sent to and from an outstation when and to the extent that, there is a demand for it, e.g. in a DA-TDMA system forming part of the Public Switched Telephone Network when a call is to be sent to or from an outstation. It is a characteristic of such systems that the outstations are at random and unplanned distances from the head end. The transmission of digital information from the head end to the outstations is known as downstream transmission and the fact that the distances between the head end and the outstations are random presents no problem to downstream transmission. Digital information transmission in the other direction from an outstation to the head end is known as upstream communication and this does present a problem. This is because it is necessary for upstream communications to be arranged so that they do not overlap in time and thereby interfere with each other. A well known method is to transmit a burst of information from each outstation that is carrying traffic at that time in turn and so time the transmission of these bursts that they arrive at the head end sequentially and without overlap.

In order to achieve this there must be knowledge within the system of the times of flight of bursts of digital information from each outstation to the head end. The process of gaining this information and putting it to use so as to avoid overlap is known as "ranging". The repetition rate and accuracy required of the ranging process depends on the nature of the system, that is whether it is static, mobile, radio, cable T.V., optical etc.

One application of such TDMA systems is to multipoint radio, optical and co-axial cable systems with fixed or quasi-fixed outstations. In such a network the rate of change of range is very low and a common technique is to "range-in" an outstation when it first wishes to communicate and subsequently to observe the relative time of reception of information bursts at the head end and, if necessary, marginally correct it by sending messages to the outstation during the subsequent period of communication by the outstation.

The present invention is concerned with carrying out the initial ranging-in of an outstation on "installation".

Two methods are already known for dealing with this problem. In the first method a "dead time" or "guard time" is kept clear in the uplink specifically for the purpose of ranging and an outstation transmits a pulse or short train, when commanded to do so by the head end, within this guard time. The time of arrival of this pulse or short pulse train at the head end is then measured by the head end and information sent to the outstation to transmit its uplink traffic bursts data at a specific time so as to avoid overlap with the traffic from other outstations. In the second method ranging information is transmitted from outstations on the uplink at a low level at the same time as the wanted uplink data using a long digital sequence with a high autocorrelation function. This ranging information signal is kept low enough in level so as not to interfere with the normal uplink data reception. At the head-end a separate part of the receiver is employed which determines the range using a correlator to identify the most likely time of arrival of this low level digital sequence

Both these known systems have disadvantages, particularly in the case of multi-point optical, radio and co-axial cable TDMA systems. The first method results in a quantity of unavailable transmission time and can also involve digital storage and delay of the uplink traffic. The second option is complex and involves considerable digital processing. It also normally requires multiple transmissions of the ranging signal

An example of a known Demand Assigned Time Division Multiple Access (DA-TDMA) System is disclosed in EPA 0 318 911.

According to the present invention the Demand Assigned Time Division Multiple Access (DA-TDMA) System having a population of outstations in communication with a head-end via a common transmission medium, the timeslots of the said system being demand assigned so that there is a traffic dependent amount of free time in the uplink time frames and the said system having a ranging system for the outstations is characterised in that the ranging system has means to consolidate the said free time and make it available for ranging-in the outstations.

The present invention will now be described by way of example and with reference to the accompanying drawings in which:
Figure 1 is a block diagram showing a head-end and some associated outstations;
Figure 2 is a timing diagram.

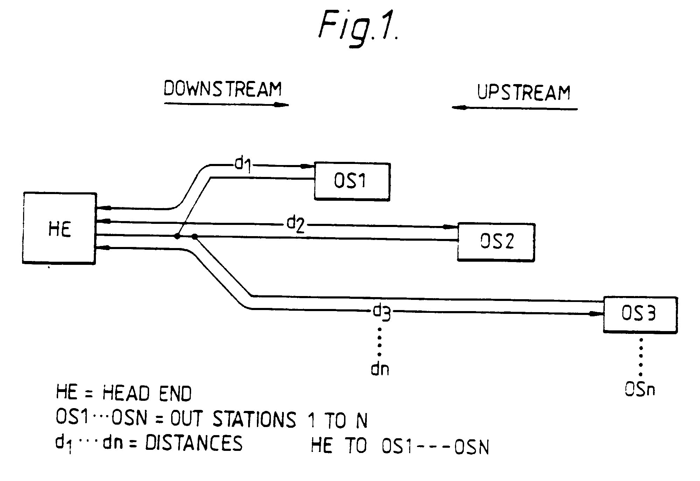

Referring now to Figure 1 of the drawings, this shows a head-end 1 connected to a plurality of outstations OS1, OS2, OS3. The system can be increased by the addition of other outstations as is indicated.

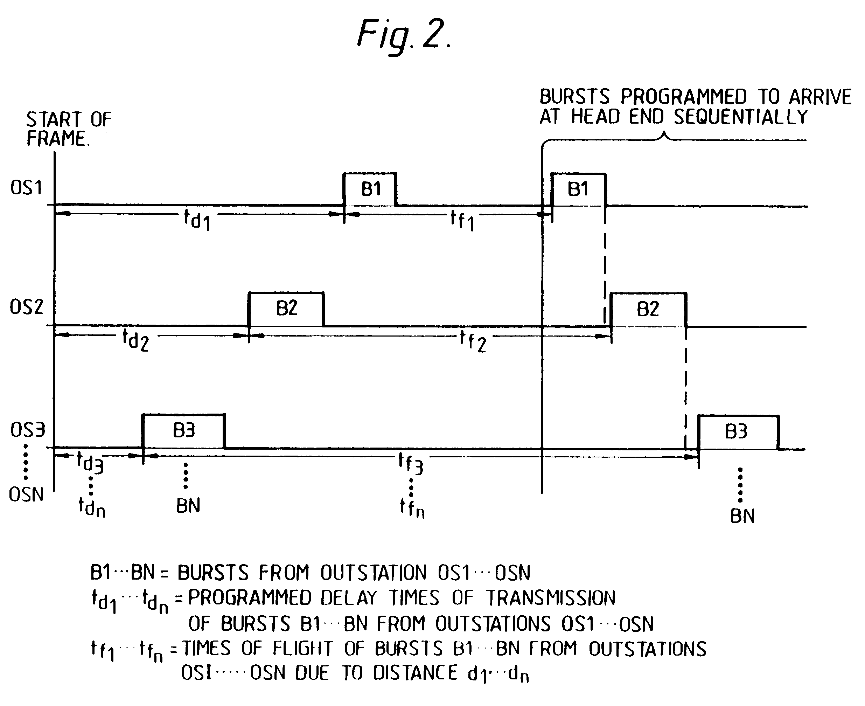

Figure 2 is a timing diagram showing how bursts B1, B2, B3 .....of main traffic signals from outstations to the head-end may be programmed to arrive sequentially at the head-end once the times td1, td2 tdn are known.

In DA-TDMA systems the timeslots are demand assigned and thus are only present when required for traffic purposes. In this case there will be a traffic dependent amount of unoccupied time in the uplink (and downlink) time frame and provided the uplink time frame is organised so as always to consolidate an adequate amount of this "free" time all in one undivided part then it can be used for the purposes of ranging- in outstations. To be able to do this however the free time must be sufficiently long to cover the uncertainty in range to reach the furthest outstation; a maximum range to the furthest outstation is a necessary characteristic of the system. There are two ways of ensuring that the free time is long enough. The first, and most simple, is to wait until the volume of traffic falls and then for the head end to issue a repeated call to the outstation to range-in, which operation would only take tens of milliseconds at most when effected. Such a sequence would normally be matched by network management control of the head end knowing a specific outstation was coming into service and would then be effected automatically once the outstation was installed and set to work.

The second way during periods of high traffic is to use "camp-on busy" i.e. for the head end to progressively reserve time on the system as calls are terminated until enough free time is available. With a "camp-on-Busy" system timeslots are reserved in a contiguous manner rather than randomly to ensure that a free path is created. Once the outstation is ranged-in, the system is released for normal traffic to use again. Both these ways require that the head end initiates the ranging procedure.

## Claims

1. A Demand Assigned Time Division Multiple Access (DA-TDMA) System having a population of outstations (OS1....) in communication with a head-end (HE) via a common transmission medium, the timeslots of the said system being demand assigned so that there is a traffic dependent amount of free time in the uplink time frames and the said system having a ranging system for the outstations, characterised in that the ranging system has means to consolidate the said free time and make it available for ranging-in the outstations.

2. A Demand Assigned Time Division Multiple Access (DA-TDMA) System as claimed in Claim 1, whereby, in the ranging system, time is reserved for ranging operations on the uplink as calls are terminated until enough time is available for ranging; once ranging has occurred the ranging system reverts to normal operation.

## Patentansprüche

1. Ein System des bedarfsbestimmten Mehrfachzugriffs im Zeitmultiplex (DA-TDMA), das eine Anzahl von Außenstationen (OS1...) in Kommunikation mit einer Hauptverteilerstation (HE) ( head-end) über ein übliches Übertragungsmedium aufweist, wobei die Zeitabstände dieses Systems bedarfsbestimmt sind, so daß es einen verkehrsabhängigen Betrag freier Zeit in den Zeitrahmen gibt und dieses System ein Einordnungs-System für die Außenstationen aufweist,
**dadurch gekennzeichnet,**
daß das Einordnungs-System Vorrichtungen aufweist, um die freie Zeit zusammenzufassen und sie für das Einordnen der Außenstationen zur Verfügung zu stellen.

2. Ein System des bedarfsbestimmten Mehrfachzugriffs im Zeitmultiplex (DA-TDMA) nach Anspruch 1, wobei in dem Einordnungssystem Zeit für Einordnungsvorgänge auf der Aufwärtsstrecke reserviert wird, wenn Rufe beendet sind, bis genügend Zeit für das Einordnen vorhanden ist; wobei das Einordnungssystem zum normalen Betrieb zurückkehrt, sobald das Einordnen erfolgt ist.

## Revendications

1. Système à accès multiple à répartition dans le temps affecté à la demande (DA-TDMA) ayant une population de stations extérieures (OS1, ...) en communication avec une extrémité de tête (HE) à support commun de transmission, les tranches temporelles du système étant affectées à la demande afin qu'il existe un temps libre dont la quantité dépend du trafic dans les trames temporelles de la liaison ascendante, et le système ayant un système de localisation des stations extérieures, caractérisé en ce que le système de localisation comporte un dispositif de consolidation du temps libre et sa mise à disposition pour la localisation initiale des stations externes.

2. Système à accès multiple à répartition dans le temps affecté à la demande (DA-TDMA) selon la revendication 1, dans lequel, dans le système de localisation, du temps est réservé pour les opérations de localisation dans la liaison montante lorsque les appels sont terminés, jusqu'à ce qu'un temps suffisant soit disponible pour la localisation et, lorsque la localisation s'est produite, le système de localisation revient au fonctionnement normal.
